# EUROPEAN PATENT APPLICATION

(11) **EP 1 622 326 A1**
(43) Date of publication of application: **01.02.2006**
(21) Application number: 04425586.7
(22) Date of filing: 29.07.2004
(51) Int. Cl.: H04L 12/58, H04L 29/06, H04L 12/24

(54) **Console-type system for managing communications**

(71) Applicant: Sertea S.r.l., 24044 Dalmine (BG) (IT)
(72) Inventor: Manenti, Roberto, c/o Sertea S.R.L., 24044 Dalmine (BG) (IT)
(74) Representative: Garavelli, Paolo

(57) **Abstract**

A console for managing messages prepared, organised and sent by means of computers connected to a network and for performing a procedure for rearranging response messages in data bases for commercial and administrative, marketing, safety, and alarm uses comprises a computer (1) connected to a file server (2) and to at least one mobile telephone station (3); a specific cellular phone (5) connected to the file server (2) adapted to receive messages sent by users in SMS and MMS standards; a dedicated protocol able to create a connection among different data bases (4), a data base (4a) of users related to a message prepared by the console manager; and a data base of events (4c). The data base (4c) is composed of a data base of active instruments (4c1) and a data base of digitalized measurement values (4c2) issued by the active instruments contained in their data base (4c1).

## Description

The present invention relates to the management of measurements detected by a sensor-type instrument. The invention represents a development in the communications management combined to the field of measurement of physical quantities.

In fact, such communication is managed by a computer network operating according to a procedure which rearranges messages and creates data bases for commercial and administrative, marketing, safety, and alarm use. The content of such messages managed by the proposed system, is of the digital type and is combined with the measurement datum transmitted by sensors interacting with the physical quantities object of measurement through devices also of the RFIDtype.

In some cases, however, it is possible to take advantage of inherent individualisation properties of a mobile telephony system by GPS and through which it is possible to realise a mapping of a vast geographical area. In this case, the present invention regards the information system organisation adapted to detect, in a geographical map reconstructed by a GPS system, the exact coordinates of the specific mobile instrument and therefore to locate a person and/or object and to inform the user which launched the search request by sending him a SMS message.

Generally, a measurement system of physical quantities combined with a messaging system according to the present invention allows managing:
- defined control and adjustment operations;
- a preventive maintenance procedure of wide user equipments like disk brake pad and/or car tire wearing;
- defined guide and surveillance operations during radio navigation;
- information related to the presence of intruders detected by radio wave reflection reading;
- training and information steps related to general messaging.

Matching the measuring instrument field with the information digital management field constitutes a innovative system based on the use of a messaging management console able to monitor measured physical quantities by sensors applied to measurement equipment and to manage a database of information collected and matched to users recorded in a users database, sending to these latter ones information messages by means of SMS messages, e-mail or standard formats as fax.

The aforesaid and other purposes and advantages of the invention, as will result by the following description, are reached with a management system as described in Claim 1. Preferred embodiments and non trivial variations of the present invention are the subject of the dependent claims.

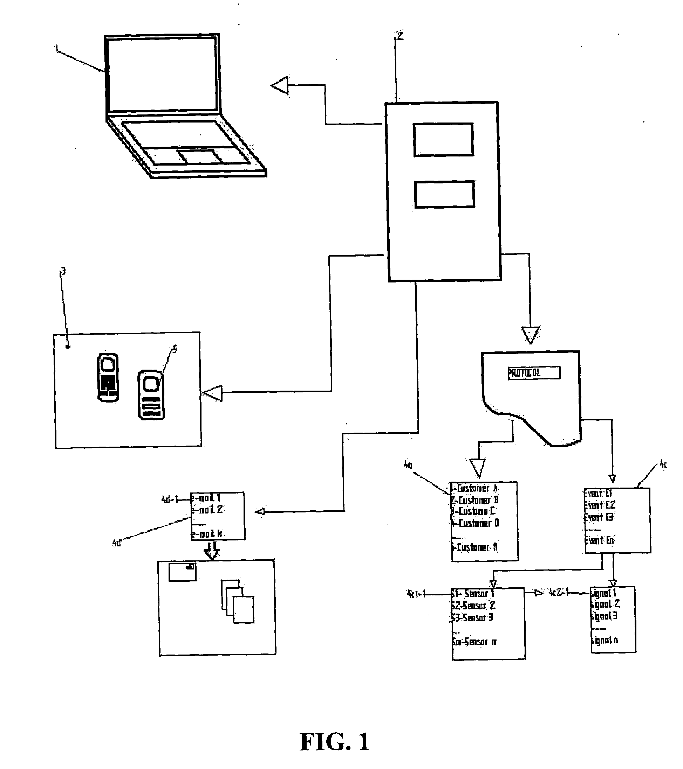

The present invention will be better described by some preferred embodiments thereof, given as non-limiting examples, with reference to the enclosed drawings, in which the only Figure 1 shows a schematic diagram of an embodiment of the system of the present invention.

The new system is based substantially on the use of a console comprising: a computer 1; a file server 2 connecting such computer 1 to one or more mobile telephony stations (cellular phones) 3 or a specific cellular phone 5 which is able to receive SMS and MMS messages; a dedicated protocol which connects a users data base 4a to an events data base 4c, such events being the measurement variables measured by the quoted sensors and formed by a database of the active measuring instrument 4c1 and a database of digitalizated measurement values 4c2 released by the active instrument.

Such protocol allows performing:
- the correlation between users which constitute the data base and the events data base 4c;
- the management of response messages to send to the users composing the data base 4a creating a new date base 4d storing automatically prepared response messages.

A new aspect of the invention concerns the management of the data base 4d, this latter one being addressable to a message management network which provides for sending certified messages or series of administrative legal paper documents (invoices, registered letters, etc.) to all who may be concerned.

Both the manager which manages the message administration console and the affiliates to the network take care, in the same way, of compiling the users data base 4a. Particularly, the console manager prepares the messages sending the same to the users enrolled to the network.

A message administration console as the above-described one is part of a wider communication and publicity management system having a local or global importance and operating by means of a network of servers comprising specific programs (protocols) to process requests and bids, to manage announces and insertions discriminating the entry data, resulting in the providing of a management service of a certain event informing the user by fax on demand, e-mail or SMS and MMS messages corresponding to the data connected to that specific event and accompanied by micropublicity, this latter being created (autonomously) by the network manager.

An administration console of the above-described type and belonging to the publicity communication management system has been used to activate an information and certification service that can be adapted to different technical and commercial fields.

Particularly, some services carried out by the present invention are described, without limiting the scope of the invention which is able to be used in the widest technological and installation management fields using a computer network connected by e-mail and a telephone line server, as well as using a typical satellite connection.

The description of the invention refers to the following examples of installations interlocked with communication and information management systems.

The first example relates to the information management system comprising the creation of certification and commercial documents by a firm which produces and distributes goods.

The conveyor delivers the good identified by a magnetic strip 4c1-1. Said magnetic strip can be an unique RFID type code. The vehicle used by the conveyor is provided with a system for reading RF signals that is able to transmit encoded signals referring to the good provided with magnetic strip. When the conveyor scans the magnetic strip referred to the delivered good, a signal is automatically sent to the console operational centre. Such signal is automatically catalogued in the data base 42c-1 storing measured or relieved values and belonging to the events data base 4c. The protocol of the information management console of the business operational centre, after having intercepted and classified the signal as data element 4c2-1, takes automatically care of adding in own data base 4d the response data element 4d-1 referring to the event 4c-1 recognised by the intercepted signal 4c2-1 and the magnetic strip 4c1-1.

The code signal is sent to the operational centre through a GPS satellite system.

If the vehicle is not provided with a system for reading RF signals, a signalling of occurred delivery of the product is sent to the operational centre by a messaging system which associates the conveyor cellular phone to the GPS satellite system. In this case the conveyor uses a fax on board the vehicle or is able to send SMS or MMS messages using a connection to a satellite apparatus managed by the messaging management system protocol.

The distributing company receives the message as an event of the data base 4c-1 and is able to send the documentation to the client according to the procedure managed by the protocol; then, the manager can start the billing procedure related to the delivered material using the data base 4d; the distributing company is also able to send a certified e-mail to a distributing centre which manages certified e-mail and therefore to send the correspondent paper document that is legally valid, i.e. an invoice or a registered letter.

The second example relates to a communication management system based on the creation of digital information combined to the measurement of water flow or gas flow by means of the city distribution network manager.

In this case, the active instruments data base 4c1 contains the list of users arranged on the whole gas and/or water distribution network. The measurement apparatus of the gas flow and/or water flow consumed by a specific user is provided with a RFID device or the like that is able to send signals relative to the physical quantity measured by the same apparatus.

The structure of the data base of measured values 4c2, as well as the list of events 4c and the users data base 4a, are managed and correlated by the same protocol used for distribution management and merchandise billing.

Also in this case, the data base 4d contains a list of types of final information sent by the network manager to the distribution network user. For example, the distributing company manages a system for issuing invoices, invoices being expiring, missed payment prompts, and for issuing reports containing consumption data. The management system allows reading of consumption data, transmitting consumption data, receiving consumption accounting in a managing software and billing consumptions, printing and automatically (or manually) dispatching the invoices, dispatching SMS and/or e-mail messages and/or fax as memo of the invoices being expiring, communicating and prompting missed payments by SMS, fax, e-mail, mail, performing delayed payment notices of users by dispatching legal documents (certified e-mail and registered letter with delivery acknowledgment), and remotely stopping the service supply.

The communication management console combined with the data base management of events related to the field of the measurement of physical quantities substantially reaches the objective of processing the data produced by the sensors creating a post-processing system interacting with a determined physical event combined with the functionality of changing the temporal evolution of that specific event.

The strict correlation among:
- real time control of the measurement systems;
- measurement of physical quantities;
- digital information management;

is a further object of the invention described in this document characterised by an information management console combined to alarm and overseeing systems.

This invention provides a console managed by an user, instrument, event, messaging - data base correlation protocol structured according to the above examples.

Among the alarm systems, the credit card and debt card management control prevails. The related information management system is provided with a protocol which creates a data base of events adjourned in real time depending on the banking transactions of the credit or debt card contained in the data base 4c and related to the banking service clients data base 4a. The alarm procedure is managed according to the messaging data base 4d which sends a SMS or fax or e-mail to the cellular phone combined with the used card transferring the information of the occurred transaction to the user registered and combined to the clients data base.

The advantage of such alarm system, useful both for credit and debt cards, is provided by the immediate detection in case of unauthorised use of the authorising document.

Among the overseeing systems, the most suited one is that for elderly people control using a GPS satellite network and RFID strips put on clothing and accessories of people to be controlled.

The protocol belonging to the communication management console is also able to compile an advertising data base 4e: the correlation of advertising information with the contained message in the data base 4d allows in fact the dispatch of free messages if the messaging service allows paid sponsorships or payments care of users.

## Claims

1. Consolle for managing messages prepared, organised and sent by means of computers connected to a network and for performing a procedure for rearranging response messages in data bases for commercial and administrative, marketing, safety, and alarm uses comprising:
- a computer (1) connected to a file server (2) and to at least one mobile telephone station (3);
- a specific cellular phone (5) connected to said file server (2) adapted to receive messages sent by users in SMS and MMS standards;
- a dedicated protocol able to create a connection among different data bases (4);
- a data base (4a) of users related to a message prepared by the consolle manager;
- a data base of events (4c);
**characterised in that** said data base of events (4c) is composed of a data base of active instruments (4c1) and a data base of digitalized measurement values (4c2) issued by said active instruments contained in said data base of active instruments (4c1).

2. Consolle according to Claim 1, **characterised in that** said protocol is adapted to address the response messages of said users in a data base (4d) and **in that** said response messages are able to reconstruct the temporal history of events contained in said data base (4c).

3. Consolle according to Claim 1, **characterised in that** the management protocol of said console is adapted, following a signal (4c2-1) interception and classification, to add to its data base (4d) a response datum (4d-1) relative to said event (4c-1) and located by the intercepted signal (4c2-1) through an active instrument (4c1-1).

4. Consolle according to Claim 1, **characterised in that** an interest event is associated to an e-mail address and/or a cellular phone number (5) defined by the console manager.

5. Consolle according to Claim 1, **characterised in that** it is adapted to prepare documents and messages through a correlation of data base (4a) messages with sponsors contained in a data base (4b), said sponsors being classified depending on a determined geographical extension.

6. Consolle according to Claim 1, **characterised in that** said console allows the network manager to select an event displaying said received messages related to said specific event.

7. Console according to Claim 1, **characterised in that** it is adapted to perform the presentation of information received by SMS, e-mail or fax in a format that can be displayed on computer that can be exported in another format (printing, spreadsheet, etc.).
